# FASCICULE DE BREVET EUROPEEN

(11) **EP 2 172 668 B1**
(45) Date de publication et mention de la délivrance du brevet: **13.04.2016**
(21) Numéro de dépôt: 09305889.9
(22) Date de dépôt: 24.09.2009
(51) Int. Cl.: F16F 9/34

(54) **Valve pour amortisseur disposée entre une chambre inférieure et une chambre de compensation de l'amortisseur**
Dämpferventil, das zwischen einer unteren Kammer und einer Ausgleichskammer des Dämpfers angeordnet ist
Damper valve arranged between a lower chamber a compensation chamber of the damper

(30) Priorité: 01.10.2008 FR 0856631
(43) Date de publication de la demande: 07.04.2010
(73) Titulaire: ALSTOM Transport Technologies, 92300 Levallois-Perret (FR)
(72) Inventeur: Martin, Michel, 71200, Le Creusot (FR); Ducarouge, Guy, 71670, Le Breuil (FR); Schmutz, Françoise, 71640, Givry (FR)
(74) Mandataire: Blot, Philippe Robert Emile

(56) Documents cités:
- DD-A1- 265 206
- US-A- 2 596 982
- US-A- 3 038 560
- US-A- 4 633 983
- US-A- 4 989 699

## Description

La présente invention concerne une valve pour amortisseur, du type comprenant un clapet coulissant dans un porte-clapet et une embase destinée à être en appui sur le fond de l'amortisseur, le porte-clapet étant retenu par l'embase par un moyen de retenue élastique, ledit porte-clapet étant mobile par rapport à ladite embase entre une position de compression, dans laquelle ledit moyen de retenue n'est pas sollicité, et une position de détente, dans laquelle ledit moyen de retenue est sollicité, ledit porte-clapet comprenant un siège reposant sur l'embase en position de compression et un corps s'étendant sous le siège et s'étendant dans l'embase.

L'invention concerne également un amortisseur comprenant une telle valve.

Dans un amortisseur, une tige de piston et un piston sont mobiles dans une chambre, par exemple remplie d'huile, séparée en une chambre supérieure et une chambre inférieure par le piston. Le piston est mobile entre une position de compression et une position de détente. En phase de compression, l'huile passe de la chambre inférieure à la chambre supérieure et en phase de détente l'huile passe de la chambre supérieure à la chambre inférieure. En phase de compression, la tige de piston et le piston s'enfoncent dans la chambre et réduisent donc le volume disponible à l'intérieur de celle-ci. Une partie de l'huile doit donc être évacuée de la chambre pour compenser l'augmentation du volume de la tige du piston dans la chambre. En phase de compression, le piston s'enfonce dans la chambre.

A cet effet, on prévoit une chambre de compensation entourant les chambres supérieure et inférieure permettant l'évacuation du surplus d'huile de la chambre inférieure en phase de compression. En phase de détente, la tige de piston et le piston remontent dans la chambre et augmentent donc le volume disponible à l'intérieur de celle-ci. Une partie de l'huile présente dans la chambre de compensation retourne dans la chambre pour compenser la diminution du volume de la tige du piston dans la chambre.

Pour permettre la circulation de l'huile entre la chambre de compensation et la chambre inférieure, on prévoit une valve commandant cette circulation. Cette valve est par exemple du type précité.

Dans les valves connues, l'élément de retenue élastique est fixé d'une part au socle du porte-clapet et d'autre part introduit dans une gorge prévue sur la face supérieure de l'embase. En phase de détente, l'élément de retenue, à cause de la dépression créée par le manque d'huile dans la chambre inférieure, se déforme et prend appui contre la gorge, ce qui « tire » sur l'embase.

De telles valves sont compliquées à réaliser et à monter. La présence d'une gorge complexifie la fabrication de l'embase et augmente l'encombrement de celle-ci. En outre, lors du montage, l'opérateur doit introduire l'élément de retenue dans la gorge en exerçant une pression manuelle sur celui-ci de sorte à le mettre en précontrainte et à l'emboîter dans la gorge. Cette opération demande un effort de pression important, en particulier pour des diamètres d'embase faibles. Lors de cette opération, l'élément de retenue est plié et peut donc se tordre ou se déformer, ce qui peut conduire à un disfonctionnement de la valve au cours de son utilisation. L'opérateur risque également de se blesser lors du montage de la valve.

Document US2596982 A décrit une valve selon le préambule de la revendication 1.

L'un des buts de l'invention est de pallier ces inconvénients en proposant une valve simple à monter et à réaliser et présentant un encombrement réduit.

A cet effet, l'invention concerne une valve du type précité, dans laquelle ledit moyen de retenue est fixé d'une part au corps du porte-clapet et comprend au moins une partie s'étendant sous la face inférieure de l'embase, ladite partie appuyant contre ladite face inférieure en position de détente du porte-clapet.

Le clapet coulisse dans le corps et le siège du porte-clapet entre une position de compression, dans laquelle le clapet ouvre un passage passant par le corps du porte-clapet entre la face supérieure et la face inférieure de l'embase, et une position de détente, dans laquelle le clapet ferme ledit passage.

L'élément de retenue élastique étant disposé sous l'embase, il n'est plus nécessaire de prévoir une gorge sur l'embase. Ainsi, l'encombrement de l'embase est réduit et le montage est facilité, l'élément de retenue pouvant simplement être fixé au porte-clapet et disposé sous l'embase, sans nécessité d'exercer une pression sur celui-ci et de l'emboîter. Les risques de déformation de l'élément de retenue sont également réduits.

Selon d'autres caractéristiques de la valve :
- l'élément de retenue élastique comprend une partie de fixation au corps du porte-clapet et au moins une lame élastique s'étendant radialement à partir de la partie de fixation, la partie extrême de ladite lame étant disposée sous la face inférieure de l'embase ;
- l'élément de retenue comprend une pluralité de lames élastiques s'étendant radialement à partir de la partie de fixation, de sorte que l'élément de retenue présente une forme en étoile ;
- le porte-clapet comprend un embout fixé à la partie extrême du corps à l'opposé du siège, ledit embout formant moyen de butée limitant le déplacement du porte-clapet en position de détente ; et
- le moyen de retenue élastique est fixé à l'embout du porte-clapet ;
- un moyen de contrainte est disposé entre le clapet et l'embout du porte-clapet, ledit moyen de contrainte contrôlant le déplacement du clapet en position de compression.

L'invention concerne également un amortisseur du type comprenant un piston mobile entre une position de compression et une position de détente entre lesquelles un liquide se déplace entre une chambre supérieure et une chambre inférieure de l'amortisseur, l'amortisseur comprenant en outre une chambre de compensation entourant lesdites chambres supérieure et inférieure, ledit amortisseur comprenant une valve permettant le passage du liquide de la chambre inférieure à la chambre de compensation en phase de compression et de la chambre de compensation à la chambre inférieure en phase de détente, dans lequel la valve est telle que décrite ci-dessus.

Selon une autre caractéristique de l'amortisseur, l'embase de la valve est montée à la partie extrême inférieure de la chambre inférieure entre un tube délimitant les chambres et le fond de l'amortisseur, le liquide passant par un passage ouvert par le clapet en phase de compression et par un passage ouvert par le porte-clapet en phase de détente.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective éclatée d'une valve selon l'invention,
- la Fig. 2 est une représentation schématique en coupe d'un amortisseur selon l'invention, en phase de compression,
- la Fig. 3 est une représentation schématique en coupe de l'amortisseur de la Fig. 2, en phase de détente.

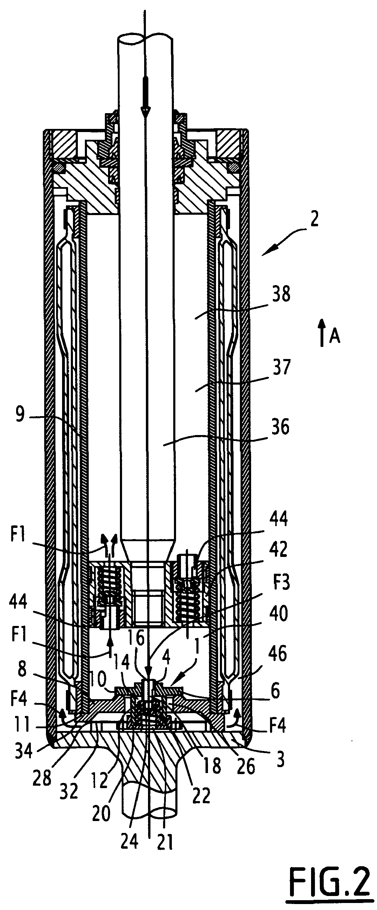

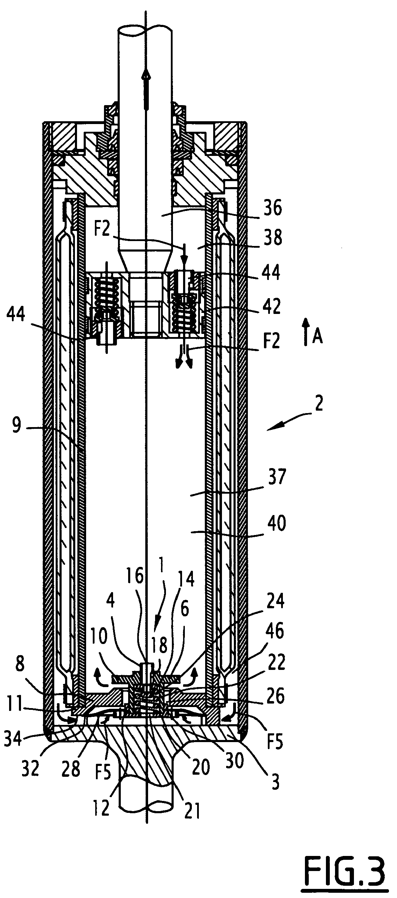

Dans la description, les termes « supérieur », « inférieur », « sous », « sur », etc. sont définis par rapport à un amortisseur monté, tel que représenté sur les Fig. 2 et 3, la direction d'élévation étant représentée par la flèche A sur ces figures.

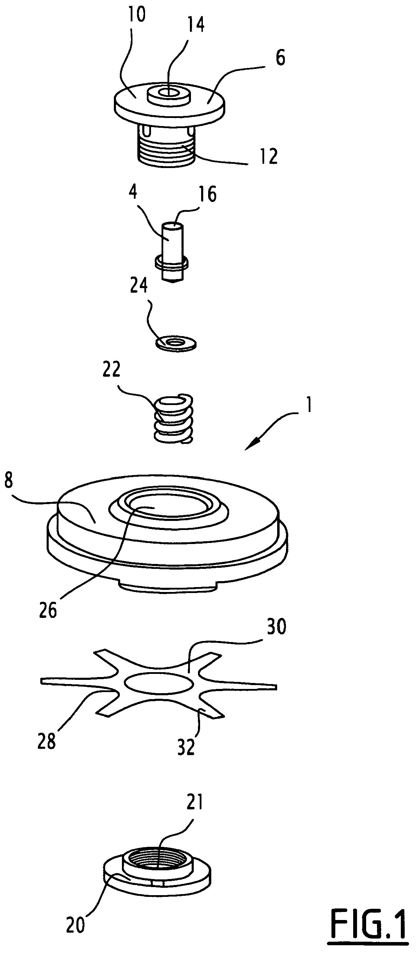

En référence à la Fig. 1, on décrit une valve 1 pour amortisseur 2 comprenant un clapet 4 coulissant dans un porte-clapet 6 et une embase 8 destinée à être en appui sur le fond de l'amortisseur 2.

Comme représenté sur les Fig. 2 et 3, l'embase 8 est disposée entre la partie inférieure du tube 9 délimitant le volume de la chambre 37 de l'amortisseur et le fond 3 de l'amortisseur 2. Le tube 9 repose sur un rebord annulaire 11 formé sur la face supérieure de l'embase 8 tandis que la face inférieure 34 de l'embase 8 repose sur le fond de l'amortisseur 2. Le fonctionnement de cet amortisseur 2 en relation avec la valve 1 sera décrit ultérieurement.

Le porte-clapet 6 comprend un siège 10 et un corps 12 s'étendant à partir du siège 10 sous celui-ci à l'intérieur de l'embase 8. Dans sa partie centrale, le porte-clapet comprend un alésage 14 traversant ledit siège 10 et ledit corps 12. L'alésage 14 présente un diamètre correspondant au diamètre extérieur du clapet 4 dans le corps 12. Le diamètre extérieur du corps 12 est plus important que le diamètre extérieur du clapet 4.

Le clapet 4 est monté coulissant dans l'alésage 14 du porte-clapet 6 par rapport au porte-clapet 6. Le clapet 4 comprend une ouverture supérieure 16 s'étendant sensiblement horizontalement autour de l'axe du clapet 4 et une ouverture inférieure 18 s'étendant sensiblement verticalement dans une partie inférieure de la paroi du clapet 4. L'ouverture supérieure 16 communique avec l'ouverture inférieure 18 par un alésage s'étendant autour de l'axe du clapet 4. Le clapet 4 est mobile entre une position de détente (Fig. 3), dans laquelle le clapet 4 s'étend principalement dans la partie de l'alésage 14 située dans le siège 10 du porte-clapet 6, et une position de compression, dans laquelle l'ouverture inférieure 18 s'étend dans la partie de l'alésage 14 située dans le corps 12 du porte-clapet 6. Ainsi, en position de détente, l'ouverture inférieure 18 est fermée par la partie de l'alésage 14 située dans le siège 10 et dans la position de compression, l'ouverture inférieure 18 est ouverte et débouche dans la partie de l'alésage 14 de plus grand diamètre.

Un embout 20 est fixé à la partie extrême du corps 12 du porte-clapet 6 à l'opposé du siège 10. A cet effet, l'embout 20 est par exemple vissé à la partie extrême du corps 12. L'embout 20 comprend un alésage central 21 communiquant avec l'alésage 14 du porte-clapet 6.

Un moyen de rappel élastique 22, tel qu'un ressort, est monté entre l'embout 20 et le clapet 4 et est par exemple préchargé au moyen d'une rondelle 24 s'étendant entre le moyen de rappel 22 et le clapet 4. Le moyen de rappel 22 est ainsi agencé pour ramener le clapet 4 en position de détente lorsqu'il a été déplacé en position de compression.

Le porte-clapet 6 est disposé dans un alésage central 26 de l'embase 8 et est monté mobile par rapport celle-ci entre une position de compression, dans laquelle le siège 10 repose sur la face supérieure de l'embase 8 et une position de détente, dans laquelle le siège 10 est déplacé vers le haut et ne repose pas sur l'embase 8. Le diamètre de l'alésage 26 est supérieur à celui du corps 12 du porte-clapet.

Le porte-clapet 6 est en outre retenu par l'embase 8 par un élément de retenue élastique 28. L'élément de retenue 28 comprend une partie de fixation 30 formée par un alésage disposé par exemple autour de l'embout 20 avant sa fixation au corps 12 du porte-clapet. L'élément de retenue 28 comprend en outre une pluralité de lames élastiques 32 s'étendant radialement à partir de la partie de fixation de sorte que le moyen de retenue 28 présente une forme d'étoile, comme représenté sur la Fig. 1. La partie extrême d'une ou de plusieurs de ces lames 32 est disposée sous la face inférieure 34 de l'embase 8 de sorte à retenir le porte-clapet 6 par rapport à l'embase 8, comme représenté sur les Fig. 2 et 3. En position de compression, le moyen de retenue 28 n'est pas sollicité. En position de détente, l'élément de retenue 28 prend appui contre la face inférieure 34 et se déforme pour permettre le déplacement du porte-clapet 6, comme représenté sur la Fig. 3. Il convient de noter qu'en position de détente, l'embout 20 forme un moyen de butée limitant le déplacement du porte-clapet 6 par rapport à l'embase 8 en venant en appui contre celui-ci. Le moyen de retenue 28 ramène le porte-clapet en position de compression lorsque celui-ci n'est plus sollicité, comme cela sera décrit ultérieurement.

La valve 1 décrite ci-dessus est disposée dans l'amortisseur 2 qui est d'une structure classique. Ainsi, l'amortisseur 2 comprend un piston 42 et une tige de piston 36 mobiles dans une chambre 37 séparée en une chambre supérieure 38 et une chambre inférieure 40 par le piston 42. La chambre 37 est remplie, par exemple, d'huile qui se déplace entre la chambre inférieure 40 et la chambre supérieure 38 en phase de compression, comme représenté par les flèches F₁ de la Fig. 2, et entre la chambre supérieure 38 et la chambre inférieure 40 en phase de détente, comme représenté par les flèches F₂ de la Fig. 3. A cet effet, le piston 42 est muni de valves 44 adéquates pour permettre le passage de l'huile d'une chambre à l'autre. Cet agencement étant connu, il ne sera pas décrit plus en détail ici.

Le déplacement de la tige du piston 36 et du piston 42 en phase de compression entraîne une diminution du volume disponible pour l'huile dans la chambre 37, du fait de l'augmentation du volume de tige 36 dans la chambre 37. Ce surplus d'huile est évacué dans une chambre de compensation 46 disposée autour de la chambre 37 par l'intermédiaire de la valve 1. A cet effet, l'embase 8 est montée à la partie extrême de la chambre inférieure 40 de sorte à fermer celle-ci, entre le tube 9 délimitant la chambre 37 et le fond 3 de l'amortisseur 2, le clapet 4 et le porte clapet 6 étant disposés dans la chambre inférieure 40.

En phase de compression, le piston 42 se déplace vers le bas, le volume de la chambre inférieure 40 diminue et la pression augmente dans cette chambre. L'augmentation de la pression provoque le déplacement du clapet 4 vers sa position de compression à l'encontre de la force du moyen de rappel 22 et l'huile pénètre dans le clapet 4 par son ouverture supérieure 16 et est évacuée par son ouverture inférieure 18 qui se trouve en regard du corps 12 du porte clapet 6, comme représenté par la flèche F₃ de la Fig. 2. Le surplus d'huile passe par l'alésage central 21 de l'embout 20 qui est en communication avec la chambre de compensation 46 et l'huile est ainsi évacuée dans la chambre de compensation 46, comme représenté par les flèches F₄ de la Fig. 2.

En phase de détente, le piston 42 se déplace vers le haut, le volume de la chambre inférieure 40 augmente et il se crée une dépression dans cette chambre. Le clapet 4 n'est donc plus sollicité et le moyen de rappel 22 le ramène dans sa position de détente, ce qui ferme son ouverture inférieure 18. La dépression entraîne le déplacement du porte-clapet 6 vers le haut à l'encontre de la force du moyen de retenue 28 qui se déforme. Le socle 10 du porte-clapet se soulève et se décolle de l'embase 8, ce qui ouvre un passage entre la chambre inférieure 40 et l'alésage central 26 de l'embase 8. Du fait de la dépression, l'huile se déplace dans ce passage et passe de la chambre de compensation 46 à la chambre inférieure 40, comme représenté par les flèches F₅ de la Fig. 3. Lorsque la dépression disparaît, le moyen de retenue 28 ramène le porte-clapet 6 dans sa position de compression, ce qui ferme le passage entre l'alésage central 26 de l'embase 8 et la chambre inférieure 40.

Le positionnement de l'élément de retenue 28 dans la valve 1 décrite ci-dessus permet de faciliter la construction et le montage de cette valve 1. En effet, la gorge qui était prévue au-dessus de l'embase dans les valves antérieures n'est plus nécessaire, ce qui simplifie la construction de cette embase et la rend moins encombrante. En outre, le moyen de retenue 28 est fixé simplement entre le porte-clapet 6 et l'embase 8, sans nécessiter de force de pression particulière ou de déformation du moyen de retenue 28.

## Revendications

1. Valve (1) pour amortisseur (2), du type comprenant: un porte-clapet (6) ; un clapet (4) ; et une embase (8) destinée à être en appui sur le fond de l'amortisseur (2),
ledit porte-clapet (6) comprenant : un siège (10) reposant sur l'embase (8) dans une position de compression ; un corps (12) s'étendant sous le siège (10) et s'étendant dans l'embase (8) ; et un alésage (14) traversant ledit siège (10) et ledit corps (12) selon un axe vertical (A), ledit alésage comprenant une première partie située dans le siège (10) et une seconde partie, de plus grand diamètre, située dans le corps (12),
le clapet (4) étant coulissant dans l'alésage (14) du porte-clapet (6), selon l'axe vertical, entre la position de compression et une position de détente,
le porte-clapet (6) étant retenu par l'embase (8) par un moyen de retenue élastique (28), ledit porte-clapet (6) étant mobile selon l'axe vertical par rapport à ladite embase (8) entre la position de compression, dans laquelle ledit moyen de retenue (28) n'est pas sollicité, et la position de détente, dans laquelle ledit moyen de retenue (28) est sollicité,
ledit moyen de retenue (28) étant fixé au corps (12) du porte-clapet (6) et comprenant au moins une partie (32) s'étendant sous une face inférieure (34) de l'embase (8), ladite partie (32) appuyant contre ladite face inférieure (34) en position de détente du porte-clapet (6),
**caractérisée en ce que** le clapet (4) comporte une ouverture supérieure axiale (16) et une ouverture inférieure latérale (18) communiquant l'une avec l'autre, **en ce qu'**en position de détente, ladite ouverture inférieure latérale (18) est située dans la première partie de l'alésage (14) et est fermée par ladite première partie, et **en ce qu'**en position de compression, ladite ouverture inférieure latérale (18) est située dans la seconde partie de l'alésage (14) et est ainsi ouverte, ladite
ouverture inférieure latérale (18) ouvrant alors un passage passant par le corps (12) du porte-clapet (6) entre une face supérieure et la face inférieure (34) de l'embase (8).

2. Valve selon la revendication 1, **caractérisée en ce que** l'élément de retenue élastique (28) comprend une partie de fixation (30) au corps (12) du porte-clapet (6) et au moins une lame élastique (32) s'étendant radialement à partir de la partie de fixation (30), la partie extrême de ladite lame (32) étant disposée sous la face inférieure (34) de l'embase (8).

3. Valve selon la revendication 2, **caractérisée en ce que** l'élément de retenue (28) comprend une pluralité de lames élastiques (32) s'étendant radialement à partir de la partie de fixation (30), de sorte que l'élément de retenue (28) présente une forme en étoile.

4. Valve selon l'une quelconque des revendications 1 à 3, **caractérisée en ce que** le porte-clapet (6) comprend un embout (20) fixé à la partie extrême du corps (12) à l'opposé du siège (10), ledit embout (20) formant moyen de butée limitant le déplacement du porte-clapet (6) en position de détente.

5. Valve selon la revendication 4, **caractérisée en ce que** le moyen de retenue élastique (28) est fixé à l'embout (20) du porte-clapet (6).

6. Valve selon la revendication 4 ou la revendication 5, **caractérisée en ce qu'**un moyen de contrainte (22) est disposé entre le clapet (4) et l'embout (20) du porte-clapet (6), ledit moyen de contrainte (22) contrôlant le déplacement du clapet (4) en position de compression.

7. Amortisseur (2) du type comprenant un piston (42) mobile entre une position de compression et une position de détente entre lesquelles un liquide se déplace entre une chambre supérieure (38) et une chambre inférieure (40) de l'amortisseur, l'amortisseur comprenant en outre une chambre de compensation (46) entourant lesdites chambres supérieure (38) et inférieure (40), ledit amortisseur comprenant une valve (1) permettant le passage du liquide de la chambre inférieure (40) à la chambre de compensation (46) en phase de compression et de la chambre de compensation (46) à la chambre inférieure (40) en phase de détente, **caractérisé en ce que** ladite valve (1) est selon l'une quelconque des revendications 1 à 6.

8. Amortisseur selon la revendication 7, **caractérisé en ce que** l'embase (8) de la valve (1) est montée à la partie extrême inférieure de la chambre inférieure (40) entre un tube (9) délimitant les chambres (38, 40) et le fond (3) de l'amortisseur (2), le liquide passant par un passage ouvert par le clapet (4) en phase de compression et par un passage ouvert par le porte-clapet (6) en phase de détente.

## Patentansprüche

1. Ventil (1) für einen Stoßdämpfer (2), des Typs aufweisend:
einen Ventilträger (6), ein Ventil (4) und einen Sockel (8), der dazu bestimmt ist, auf dem Boden des Stoßdämpfers (2) in Auflage zu sein,
wobei der Ventilträger (6) aufweist: einen Sitz (10), der auf dem Sockel (8) aufliegt in einer Kompressionsposition, einen Körper (12), der sich unter dem Sitz (10) erstreckt und sich in den Sockel (8) erstreckt, und eine Bohrung (14), die entlang einer vertikalen Achse (A) durch den Sitz (10) und den besagten Körper (12) hindurchgeht, wobei die Bohrung einen ersten Abschnitt, der in dem Sitz (10) angeordnet ist, und
einen zweiten Abschnitt, von größerem Durchmesser, aufweist, der in dem Körper (12) angeordnet ist,
wobei das Ventil (4) entlang der vertikalen Achse in der Bohrung (14) des Ventilträgers (6) verschiebbar ist zwischen der Kompressionsposition und einer Entspannungsposition,
wobei der Ventilträger (6) von dem Sockel (8) rückgehalten ist durch ein elastisches Rückhaltemittel (28), wobei der Ventilträger (6) entlang der vertikalen Achse bezüglich des besagten Sockels (8) bewegbar ist zwischen der Kompressionsposition, in welcher das besagte Rückhaltemittel (28) nicht beaufschlagt ist, und der Entspannungsposition, in welcher das besagte Rückhaltemittel beaufschlagt ist,
wobei das besagte Rückhaltemittel (28) an dem Körper (12) des Ventilträgers (6) fixiert ist und aufweist wenigstens einen Abschnitt (32), der sich unter einer unteren Fläche (34) des Sockels (8) erstreckt, wobei sich der besagte Abschnitt (32) in der Entspannungsposition des Ventilträgers (6) gegen die besagte untere Fläche (34) abstützt,
**dadurch gekennzeichnet, dass** das Ventil (4) eine obere, axiale Öffnung (16) und eine untere, laterale Öffnung (18) aufweist, die miteinander kommunizieren, dass in der Entspannungsposition die besagte untere, laterale Öffnung (18) in dem ersten Abschnitt der Bohrung (14) angeordnet ist und von dem besagten ersten Abschnitt geschlossen ist, und dass in der Kompressionsposition die besagte untere, laterale Öffnung (18) in dem zweiten Abschnitt der Bohrung (14) angeordnet ist und damit offen ist, wobei die besagte
untere, laterale Öffnung (18) dann eine Passage öffnet, die durch den Körper (12) des Ventilträgers (6) passiert, zwischen einer oberen Fläche und der unteren Fläche (34) des Sockels (8).

2. Ventil gemäß Anspruch 1, **dadurch gekennzeichnet, dass** das elastische Rückhalteelement (28) einen Abschnitt zur Fixierung (30) am Körper (12) des Ventilträgers (6) und wenigstens ein elastisches Blatt (32) aufweist, das sich ausgehend von dem Abschnitt zur Fixierung (30) radial erstreckt, wobei der äußerste Abschnitt des Blatts (32) unter der unteren Fläche (34) des Sockels (8) angeordnet ist.

3. Ventil gemäß Anspruch 2, **dadurch gekennzeichnet, dass** das Rückhaltelement (28) eine Mehrzahl von elastischen Blättern (32) aufweist, die sich ausgehend von dem Abschnitt zur Fixierung (30) radial erstrecken, sodass das Rückhalteelement (28) eine Sternform hat.

4. Ventil gemäß irgendeinem der Ansprüche 1 bis 3, **dadurch gekennzeichnet, dass** der Ventilträger (6) eine Endabdeckung (20) aufweist, die an dem äußersten Abschnitt des Körpers (12) entgegengesetzt zu dem Sitz (10) fixiert ist, wobei die besagte Endabdeckung (20) ein Anschlagmittel bildet, das die Verlagerung des Ventilträgers (6) in der Entspannungsposition begrenzt.

5. Ventil gemäß Anspruch 4, **dadurch gekennzeichnet, dass** das elastische Rückhaltemittel (28) an der Endabdeckung (20) des Ventilträgers (6) fixiert ist.

6. Ventil gemäß Anspruch 4 oder Anspruch 5, **dadurch gekennzeichnet, dass** ein Spannmittel (22) zwischen dem Ventil (4) und der Endabdeckung (20) des Ventilträgers (6) angeordnet ist, wobei das Spannmittel (22) die Verlagerung des Ventils (4) in die Kompressionsposition steuert.

7. Stoßdämpfer (2) des Typs aufweisend einen Kolben (42), der zwischen einer Kompressionsposition und einer Entspannungsposition bewegbar ist, zwischen denen eine Flüssigkeit sich verlagert zwischen einer oberen Kammer (38) und einer unteren Kammer (40) des Stoßdämpfers, wobei der Stoßdämpfer ferner aufweist eine Kompensationskammer (46), die die besagte obere (38) und untere (40) Kammer umgibt, wobei der besagte Stoßdämpfer eine Ventil (1) aufweist, das die Passage von Flüssigkeit von der unteren Kammer (40) zu der Kompensationskammer (46) in einer Kompressionsphase und von der Kompensationskammer (46) zu der unteren Kammer (40) in einer Entspannungsphase erlaubt, **dadurch gekennzeichnet, dass** das besagte Ventil (1) gemäß irgendeinem der Ansprüche 1 bis 6 ist.

8. Stoßdämpfer gemäß Anspruch 7, **dadurch gekennzeichnet, dass** der Sockel (8) des Ventils (1) an den äußersten unteren Abschnitt der unteren Kammer (40) zwischen einem Rohr (9), das die Kammern (38, 40) begrenzt, und dem Boden (3) des Stoßdämpfers (2) montiert ist, wobei die Flüssigkeit in der Kompressionsphase durch eine Passage, die von dem Ventil (4) geöffnet ist, und in der Entspannungsphase durch eine Passage passiert, die von dem Ventilträger (6) geöffnet ist.

## Claims

1. Valve assembly (1) for a damper (2) of the type comprising: a valve holder (6) ; a valve (4) ; and a base (8) intended to be supported on the bottom of the damper (2), said valve holder (6) comprising : a seat (10) resting on the base (8) in a compression position ; a body (12) extending beneath the seat (10) and extending into the base (8) ; and a bore (14) which passes through said seat (10) and said body (12) along a vertical axis (A), said bore comprising a first part located in the seat (10) and a second part, of larger diameter, located in the body (12),
the valve (4) being able to slide inside the bore (14) of the valve holder (6), along the vertical axis, between the compression position and an expansion position, the valve holder (6) being held by the base (8) by means of a resilient holding mechanism (28), said valve holder (6) being mobile along the vertical axis with respect to said base (8) between the compression position, in which said holding mechanism (28) is not stressed, and the expansion position, in which said holding mechanism (28) is stressed,
said holding mechanism (28) being fixed to the body (12) of the valve holder (6) and comprising at least one portion (32) extending beneath a lower face (34) of the base (8), said portion (32) resting against said lower face (34) when the valve holder (6) is in the expansion position,
**characterized in that** the valve (4) comprises an axial upper aperture (16) and a lower lateral aperture (18) connected to one another ; **in that**, in the expansion position, said lower lateral aperture (18) is located in the first part of the valve (14) and closed by said first part ; and **in that**, in the compression position, said lower lateral aperture (18) is located in the second part of the valve (14) and is therefore open, said lower lateral aperture (18) thereby opening a passage through the body (12) of the valve holder (6) between an upper face and the lower face (34) of the base (8).

2. Valve assembly according to Claim 1, **characterised in that** the elastic holding mechanism (28) comprises a portion (30) for fixing to the body (12) of the valve holder (6) and at least one elastic sheet (32) extending radially from the fixing portion (30), the end of the said sheet (32) being located beneath the lower face (34) of the base (8).

3. Valve assembly according to Claim 2, **characterised in that** the holding mechanism (28) comprises multiple elastic sheets (32) extending radially from the fixing portion (30) such that the holding mechanism (28) is star-shaped.

4. Valve assembly according to any one of Claims 1 to 3, **characterised in that** the valve holder (6) comprises an end piece (20) fixed to the end of the body (12) opposite the seat (10), said end piece (20) forming a stop mechanism limiting the movement of the valve-holder (6) in the expansion position.

5. Valve assembly according to Claim 4, **characterised in that** the elastic holding mechanism (28) is fixed to the end piece (20) of the valve holder (6).

6. Valve assembly according to Claim 4 or Claim 5, **characterised in that** a tensioning mechanism (22) is located between the valve (4) and the end piece (20) of the valve holder (6), the said tensioning mechanism (22) controlling the movement of the valve (4) in the compression position.

7. Damper (2) of the type comprising a piston (42) which is able to move between a compression position and an expansion position between which a liquid moves between an upper chamber (38) and a lower chamber (40) of the damper, the damper also comprising a compensation chamber (46) surrounding the said upper (38) and lower (40) chambers, said damper comprising a valve assembly (1) which allows the liquid to pass from the lower chamber (40) to the compensation chamber (46) in the compression phase and from the compensation chamber (46) to the lower chamber (40) in the expansion phase, **characterised in that** said valve assembly (1) is according to one of Claims 1 to 6.

8. Damper according to Claim 7, **characterised in that** the base (8) of the valve assembly (1) is fitted to the lower end of the lower chamber (40) between a tube (9) defining the limits of the chambers (38, 40) and the bottom (3) of the damper (2), the liquid passing through a passage opened via the valve (4) in the compression phase and through a passage opened via the valve holder (6) in the expansion phase.
